# EUROPÄISCHE PATENTSCHRIFT

(11) **EP 3 265 371 B1**
(45) Veröffentlichungstag und Bekanntmachung des Hinweises auf die Patenterteilung: **07.04.2021**
(21) Anmeldenummer: 16704232.4
(22) Anmeldetag: 15.02.2016
(51) Int. Cl.: B62K 3/00, B62M 6/40, B62M 6/45, B62M 6/60

(54) **TRETROLLER, STEUERUNGSEINRICHTUNG UND VERFAHREN ZUR STEUERUNG**
SCOOTER, CONTROL DEVICE AND CONTROLLING METHOD
TROTTINETTE, DISPOSITIF DE COMMANDE ET PROCÉDÉ DE COMMANDE

(30) Priorität: 02.03.2015 DE 102015203641
(43) Veröffentlichungstag der Anmeldung: 10.01.2018
(73) Patentinhaber: Bayerische Motoren Werke Aktiengesellschaft, 80809 München (DE)
(72) Erfinder: BACHMANN, Fabian, 80639 München (DE); BOBINGER, Robert, 86316 Hügelshart (DE); GRUENWALD, Ernst, 80935 München (DE); OCHNER, Udo, 85778 Haimhausen (DE)
(86) Internationale Anmeldenummer: PCT/EP2016/053089
(87) Internationale Veröffentlichungsnummer: WO 2016/139050

(56) Entgegenhaltungen:
- EP-A1- 2 777 783
- WO-A1-2012/163789
- WO-A1-2015/086274
- WO-A1-2015/091074
- CA-A1- 2 344 026
- DE-A1- 4 240 439
- DE-A1- 10 034 277
- DE-A1- 10 053 043
- DE-U1-202013 004 872
- US-A- 5 848 660
- US-A1- 2003 221 888

## Beschreibung

Die vorliegende Erfindung betrifft einen Tretroller zum Transport von Personen, wobei der Tretroller in einem Betriebsmodus motorischer Kraft antreibbar ist. Darüber hinaus betrifft die vorliegende Erfindung eine Steuerungseinrichtung und ein Verfahren zur Steuerung eines Tretrollers.

Bei heutigen im Markt befindlichen Tretrollern gibt es Varianten für Kinder, die als klassische Tretroller betrieben werden und als Vorstufe zum Fahrrad gelten. Unter pädagogischen Aspekten trainieren die Kinder den Gleichgewichtssinn, ihre Beinmuskulatur und erlernen ein Gefühl für Geschwindigkeit, Lenken und Bremsen. Solche Produkte gibt es in unterschiedlichen Größen, die alle ausschließlich über Muskelkraft angetrieben werden. Seit einiger Zeit finden derartige Tretroller auch Anklang bei Erwachsenen, wobei diese sich in ihrer Größe, insbesondere ihrer Radgröße, von den Tretrollern für Kinder unterscheiden. Neben diesen rein muskulär antreibbaren Fahrzeugen gibt es jedoch auch Tretroller, die über einen Elektromotor mit Hilfe von elektrischer Energie bertreibbar sind. Mit Hilfe eines Gasdrehgriffs, wie von Motorrädern her bekannt, oder mit Hilfe eines Hebels kann die elektrische Leistung variiert und damit eingestellt werden, so dass der elektrische Roller mit einer gewünschten Geschwindigkeit sich vorwärts bewegt.

Aus der WO 2012/163789 A1 ist ein elektrisch unterstützter Tretroller bekannt.

Aus der EP 2 777 783 A1 ist ein pedalloses Tretfahrzeug mit einer elektrischen Trethilfe in Form eines elektrischen Hilfsantriebes bekannt.

Die US 5,848,660 zeigt einen verbesserten Leichtroller, der zum Zwecke des Transportes und der Aufbewahrung auf einfache und bequeme Weise zusammenklappbar ist.

Die DE 100 34 277 A1 bezieht sich auf ein motorisiertes Rollbrett mit mindestens zwei Rädern, von denen mindestens eines angetrieben wird, wobei der Antrieb durch einen Elektromotor erfolgt.

Aus der DE 100 53 043 A1 ist die Ansteuerung eines elektrisch betriebenen Tretrollers mit zwei, drei oder mehreren Laufrädern bekannt.

Aus der DE 20 2013 004 872 U1 ist ein Tretroller mit Elektroantrieb bekannt, bei dem jeweils mindestens ein Schalter oder Sensor an der rechten und/oder linken Seite des Trittbretts oder einer anderen geeigneten Stelle angebracht wird, der das Vorbeiziehen des Fußes beim Antreten registriert und damit die Motorsteuerung freigibt.

Aufgabe der vorliegenden Erfindung ist es einen alternativen Tretroller anzugeben, der muskulär sowie mit Hilfe elektrischer Energie antreibbar ist. Insbesondere ist es eine Aufgabe der vorliegenden Erfindung einen Roller anzugeben, dessen Bedienkonzept in Betrieb mit elektrischer Motorkraftunterstützung möglichst genau den Betrieb mit reiner Muskelkraft simuliert.

Diese Aufgabe wird mit einem Tretroller mit den Merkmalen des Patentanspruchs 5 sowie mit einer Steuerungseinrichtung mit den Merkmalen des unabhängigen Patentanspruchs 1 und einem Verfahren gemäß Anspruch 3 gelöst. Die abhängigen Merkmale stellen vorteilhafte Ausführungsformen der vorliegenden Erfindung dar.

Der erfindungsgemäße Tretroller ist ein Tretroller zum Transport von Personen, wobei der Tretroller in zumindest einem Betriebsmodus mit motorischer Kraft antreibbar ist. Der Tretroller umfasst mindestens eine Betätigungseinrichtung und mindestens einen elektrischen Motor, mit dem der Tretroller antreibbar ist. Bei einer Betätigung der Betätigungseinrichtung kann durch den Motor ein Vortriebsimpuls an dem Tretroller erzeugt werden. Weiterhin kann der Tretroller in einem ersten Betriebsmodus mit Muskelkraft und in einem zweiten Betriebsmodus mit motorischer Kraft betreibbar sein. In dem zweiten Betriebszustand kann der Tretroller zusätzlich zu der elektrischen Kraft auch mit Muskelkraft angetrieben werden. Dadurch wird im ersten Betriebsmodus keine elektrische Energie zur hilfsweisen Unterstützung verwendet, so dass der Roller als üblicher Tretroller betrieben werden kann. Im zweiten Betriebsmodus kann ein Bediener des Tretrollers wählen, ob er rein mit elektromotorischem Antrieb oder zusätzlich zur elektrischen Motorunterstützung auch die Muskelkraft zum Vortrieb nutzt.

Durch einzelnes Betätigen der Betätigungseinrichtung kann ein einzelner Vortriebsimpuls auf den Tretroller ausgeübt werden. Dadurch kann auf besonders einfache Weise ein motorischer Betriebszustand realisiert werden, bei dem der Tretroller mit elektrischer Hilfskraft betrieben wird, wobei dieser motorische Betriebszustand einen Betriebszustand mit muskulärer Antriebskraft realitätsnah simuliert. Beim Betrieb mit Muskelkraft befindet sich ein Bein des Tretrollerfahrers stets auf einem Trittbrett. Mit dem anderen Bein stößt sich der Tretrollerfahrer gelegentlich von der Fahrbahn ab und erzeugt einen einzelnen Vortriebsimpuls auf den Tretroller. Diese diskrete Erzeugung des Vortriebsimpulses wird mit der vorliegenden Erfindung elektrisch simuliert, in dem der Antrieb des Tretrollers im elektrischen Betriebszustand durch einzelne Vorwärtsimpulse angetrieben wird.

Falls die aktuelle Geschwindigkeit des Tretrollers in einem vorgegebenen Geschwindigkeitsbereich liegt, d.h. größer oder gleich einer vorgegebenen Mindestgeschwindigkeit und kleiner oder gleich einer vorgegebenen Maximalgeschwindigkeit des Tretrollers ist, dann wird durch Betätigung der Betätigungseinrichtung ein Vortriebsimpuls für eine vorbestimmte Zeitdauer erzeugt. Während dieser vorbestimmten Zeitdauer legt der Tretroller eine vorbestimmte bzw. maximal zulässige Wegstrecke zurück. Bewegt sich der Tretroller mit einer ersten Geschwindigkeit vorwärts, die in dem vorgegebenem Geschwindigkeitsbereich liegt, dann wird durch Betätigen der Betätigungseinrichtung für eine vorbestimmte Zeitdauer ein Vortriebsimpuls erzeugt Während dieser Zeitdauer beschleunigt der Roller von einer ersten Geschwindigkeit, die er vor Betätigung der Betätigungseinrichtung hatte auf eine zweite Geschwindigkeit, die höher ist als die erste Geschwindigkeit. Die Zeitdauer entspricht dem Zeitintervall, das der Tretroller benötigt, um unter der Einwirkung des Vortriebsimpulses, eine vorbestimmte Wegstrecke zurückzulegen. Diese vorbestimmte Wegstrecke kann insbesondere 1m, 2m, 5m, 8m, 10m, 12m oder 15m lang sein. Mit anderen Worten ausgedrückt: die vorbestimmte Zeitdauer ist abhängig von der Geschwindigkeit des Tretrollers. Nachdem die vorbestimmte Wegstrecke erreicht bzw. die vorbestimmte Zeitdauer abgelaufen ist, wird der Vortriebsimpuls abgeschaltet. Der Tretroller bewegt sich dann aufgrund seiner Massenträgheit kurzzeitig mit der zweiten Geschwindigkeit vorwärts und wird aufgrund der Reibungskräfte langsam abgebremst.

Unterhalb der vorgegebenen Mindestgeschwindigkeit oder oberhalb der vorgegebenen Maximalgeschwindigkeit des Tretrollers wird beim Betätigen der Betätigungseinrichtung die Erzeugung eines Vortriebsimpulses unterbunden Dadurch ist es nicht möglich, unterhalb der vorbestimmten Mindestgeschwindigkeit Vortriebsimpulse auszulösen. Dies ist ein wesentlicher Vorteil, da dadurch ein ungewolltes Beschleunigen bei langsamer Fahrt oder beim Anfahren aus dem Stand, bspw. durch Fehlbetätigung der Betätigungseinrichtung verhindert wird. Darüber hinaus erfolgt auch eine Unterdrückung von Vortriebsimpulsen, bei Erreichen einer maximal zulässigen Höchstgeschwindigkeit. Dies bietet einen Vorteil unter dem Sicherheitsaspekt, da auf besonders einfache Weise eine Höchstgeschwindigkeit des Rollers im elektrischen Betrieb realisierbar ist. Um höhere Geschwindigkeiten zu erzielen, muss dann der Fahrer bewusst unter Aufwendung von Muskelkraft durch klassisches Anschieben weiter beschleunigen. Darüber hinaus bietet dies auch Vorteile unter dem Aspekt einer Überbelastung des Elektromotors bzw. einer Sicherung vor zu starker Entladung der elektrischen Batterie des Tretrollers. Als Mindestgeschwindigkeit kann bspw. 3 km/h oder eine Schrittgeschwindigkeit von 6 km/h gewählt werden. Als Höchst- oder Maximalgeschwindigkeit bietet sich eine Geschwindigkeit von 20 km/h, 25 km/h, oder 32 km/h (entsprechend 20 mph) an Weiterhin kann der zweite Betriebsmodus des Tretrollers durch zweifache Betätigung der Betätigungseinrichtung oberhalb einer Mindestgeschwindigkeit aktiviert werden. Dadurch kann sichergestellt werden, dass der Tretroller zunächst mittels Muskelkraft auf bzw. über die Mindestgeschwindigkeit hinaus beschleunigt wird. Um danach die Auslösung einer ungewollten Vortriebsenergie zu verhindern, ist eine zusätzliche Aktivierung des zweiten Betriebsmodus vorgesehen. Diese Aktivierung kann beispielhaft durch zweifache Betätigung der Betätigungseinrichtung ausgebildet sein. Diese Doppelbetätigung muss innerhalb eines kurzen Zeitraums von bspw. 1 s, 2 s, 3 s oder 5 s erfolgen. Selbstverständlich kann die Aktivierung des zweiten Betriebsmodus auch anderweitig ausgebildet sein, bspw. durch Drücken einer Aktivierungstaste.

Der Tretroller weist zusätzlich zumindest eine Steuereinrichtung oder eine Regelungseinrichtung auf.

Weiterhin ist der Tretroller derart ausgebildet, dass durch Betätigen der Betätigungseinrichtung ein erstes Signal an die Steuereinrichtung ausgegeben wird. Die Steuerungseinrichtung gibt daraufhin, abhängig von der aktuellen Geschwindigkeit unter den in Anspruch 1 angegebenen Bedingungen, ein zweites Signal an den Motor aus, wodurch der Motor einen Vortriebsimpuls auf den Tretroller erzeugt.

Die Erfindung soll nicht auf die im Vorhergehenden beschriebene Ausführungsform beschränkt sein, in der ein Signal von der Betätigungseinrichtung ausgegeben wird. In einer alternativen Variante der Erfindung ist die Betätigungseinrichtung als Schalter ausgebildet, der nicht notwendiger Weise aktiv ein Signal ausgibt. In dieser Variante erfasst die Steuereinrichtung den Zustand des Schalter (EIN oder AUS) und ermittelt basierend darauf, ob die Betätigungseinrichtung betätigt wird oder nicht. Diese beiden Ausführungsformen sind Funktionsanalog, so dass unter Ausgabe eines Signals auch die Erfassung eines Zustandes zu verstehen ist der Betätigungseinrichtung zu verstehen ist.

In einem weiteren Aspekt betrifft die Erfindung eine Steuerungseinrichtung, zur Steuerung eines Vortriebsimpulses eines Tretrollers, wobei der Tretroller in mindestens einem Betriebsmodus mit elektrischer Motorkraft antreibbar ist. Die Steuerungseinrichtung ist dabei eingerichtet zur Durchführung der in Anspruch 1 aufgeführten Schritte. Der Tretroller kann in einem ersten Betriebsmodus mit Muskelkraft und in einem zweiten Betriebsmodus mit Muskelkraft und/oder elektrisch betreibbar sein. Wie bereits oben mit Bezug zum Tretroller erwähnt, bietet dies den Vorteil, dass auf besonders einfache Weise während eines Betriebs des Tretrollers in einem Betriebszustand mit elektrischer Hilfsunterstützung der Betrieb des Tretrollers mit Muskelkraft simuliert wird.

Durch eine Steuerungseinrichtung gemäß Anspruch 1 kann auf besonders einfache Weise sichergestellt werden, dass nur innerhalb eines vorbestimmten Geschwindigkeitsbereichs ein Vortriebsimpuls auf den Tretroller ausgelöst wird.

Weiterhin kann die Steuerung eingerichtet sein, zur Durchführung zumindest folgender Schritte: Erfassen des Betriebszustandes des Tretrollers, wobei, wenn der Tretroller in einem ersten Betriebszustand ist und die Betätigung der Betätigungseinrichtung erfasst wird, kein Signal von der Steuereinheit an den Elektromotor ausgegeben wird und wenn der Tretroller in einem zweiten Betriebszustand ist und eine Betätigung der Betätigungseinrichtung erfasst wird, ein Signal an den Elektromotor ausgegeben wird, zum Erzeugen eines Vortriebsimpulses. Dadurch kann sichergestellt werden, dass eine Plausibilitätsprüfung durchgeführt wird, wobei nur wenn sich der Tretroller in einem zweiten Betriebszustand befindet ein Vortriebsimpuls ausgegeben wird. Somit wird verhindert, dass durch Fehlbetätigung unerwünschte Vortriebsimpulse auf den Tretroller erzeugt werden.

In einem weiteren Aspekt betrifft die Erfindung ein Verfahren zur Steuerung eines Vortriebsimpuls auf einen Tretroller gemäß Anspruch 3. Die Erfassung der Betätigung kann anhand der Erfassung eines Signals, das die Betätigungseinrichtung ausgibt oder anhand des Zustandes der Betätigungseinrichtung ermittelt werden.

In einer bevorzugten Ausführungsform umfasst das Verfahren den zusätzlichen Schritt: Erfassen eines Betriebszustands in dem der Tretroller mit motorischer Kraft antreibbar ist, umfassen. Dadurch wird zunächst ermittelt, ob sich der Tretroller in dem ersten oder in dem zweiten Betriebszustand befindet.

Im Folgenden wird die Erfindung anhand der Figurenbeschreibung erläutert. Die Beschreibung, die Patentansprüche und die Zeichnungen enthalten Merkmale, die ein Fachmann auch in anderer Kombination in Betracht ziehen würde, um sie an entsprechende Anwendungsfälle der Erfindung anzupassen.

Es zeigen in schematischer Darstellung:
- Fig. 1: den prinzipiellen, strukturellen Aufbau eines Tretrollers in einer Seitenansicht,
- Fig. 2: ein Auszug eines Prinzipschaltbildes mit wesentlichen Komponenten eines elektrisch antreibbaren Tretrollers und
- Fig. 3: ein Fahrzustandsdiagramm, in dem verschiedene Fahrzustände des Tretrollers grafisch abgebildet sind.

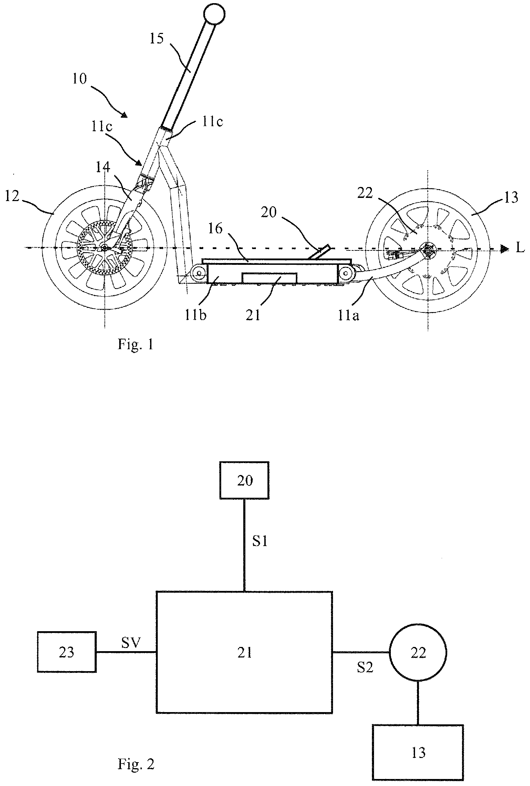

Der Gesamtaufbau des Rollers 10 soll anhand der Fig. 1 erläutert werden. Der Roller 10 umfasst einen Rahmen 11, ein Vorderrad 12, ein Hinterrad 13, eine Vorderradführung 14 und eine Lenkeinheit 15. Die Vorderradführung 14 ist als Gabel ausgebildet und ist in einem Steuerrohr 11c drehbar gelagert und damit an dem Rahmen 11 angeordnet. Mit Hilfe der Lenkeinheit 15 lässt sich das Vorderrad 12 um eine Lenkachse drehen, wodurch Kurvenfahrten mit dem Tretroller 10 ermöglicht werden. Der Rahmen 11 des Rollers umfasst ein Mittelteil 11b und eine Hinterradaufnahme 11a. Das Steuerrohr 11c, in dem die Gabel 14 drehbar gelagert ist, ist ebenfalls Bestandteil des Rahmens 11. In Längsrichtung des Tretrollers L sind die beiden Räder 12, 13 hintereinander angeordnet. Die Erfindung soll jedoch nicht auf einspurige Tretroller beschränkt sein, da sie auch in dreirädrigen oder vierrädrigen Gefährten Anwendung finden kann. Die Steuereinrichtung gemäß der Erfindung kann auch für Fahrräder mit Hilfsantrieb, so genannte Pedelecs oder E-Bikes verwendet werden. Im Mittelteil 11b des Rahmens 11 ist ein Trittbrett 16 vorgesehen, auf das sich der Tretrollerfahrer stellt. Auf der Oberseite des Trittbretts ist eine Betätigungseinrichtung 20 vorgesehen. In Fig. 1 ist diese als Hebel dargestellt. Abweichend von dieser Darstellung kann die Betätigungseinrichtung 20 auch als Drucktaster ausgebildet sein. In weiteren Ausführungsformen kann die Betätigungseinrichtung 20 auch als Drehgriff, Hebel oder Taster am Lenker der Lenkeinheit 15 angeordnet sein. Im letzteren Fall erfolgt die Betätigung dann per Hand.

In der in Fig. 1 dargestellten Variante des Tretrollers 10 erfolgt die Betätigung der Betätigungseinrichtung 20 mit dem Fuß. Vorteilhafterweise steht der Tretrollerfahrer auf dem Fußballen und berührt die Betätigungseinrichtung 20 mit der Ferse. Diese Fußstellung ermöglicht einen äußerst sicheren Stand. In Fig. 1 ist im Mittelteil 11b des Rahmens 11 eine Steuereinrichtung 21 vorgesehen. Diese wirkt zusammen mit der Betätigungseinrichtung 20 und einem Elektromotor 22. Der Elektromotor 22 ist hier beispielhaft als Nabenmotor dargestellt, der im Hinterrad 13 des Tretrollers 10 integriert ist. Das Hinterrad 13 ist das in Längsrichtung L des Tretrollers 10 hintere Rad. Dabei verläuft die Längsrichtung L entgegen einer Bewegungsrichtung des Tretrollers 10 bei Vorwärtsfahrt.

Der Tretroller 10 kann folglich in einem ersten Betriebsmodus durch Anschieben mit muskulärer Kraft vorwärts bewegt werden. Darüber hinaus kann in einem zweiten Betriebsmodus des Tretrollers 10 durch den elektrischen Motor eine motorische Hilfskraft zugeschaltet werden, die ausreicht, um den Roller motorisch vorwärts zu bewegen.

Im Folgenden soll anhand der Fig. 2 die Funktionsweise der Steuerung im zweiten Betriebsmodus erläutert werden. Fig. 2 zeigt nur einen Auszug der Bauteile und Element des Steuerungssystems, wobei nur die für die Erläuterung notwendigsten dargestellt sind. Die Betätigungseinrichtung 20 erzeugt bei deren Betätigung ein Signal S1, das von der Steuereinrichtung 21 erfasst wird. Mit anderen Worten: solange die Betätigungseinrichtung 20 niedergedrückt wird, gibt sie das Signal S1 an die Steuereinrichtung 21 aus. Die Steuereinrichtung 21 erfasst darüber hinaus auch ein Geschwindigkeitssignal SV, welches von einem Geschwindigkeitssensor 23 bspw. einem Tachometer ausgegeben wird. Auf Basis des Geschwindigkeitssignals SV kann die Steuereinrichtung 21 ermitteln, ob die Geschwindigkeit des Tretrollers 10 in einem vorbestimmten Geschwindigkeitsbereich liegt. Dieses Geschwindigkeitsband wird durch eine Mindestgeschwindigkeit Vₘᵢₙ nach unten hin und durch eine Maximalgeschwindigkeit Vₘₐₓ nach oben hin begrenzt. Die Absolutwerte, d.h. die Randwerte Vₘᵢₙ und Vₘₐₓ können dabei innerhalb des Geschwindigkeitsbandes liegen oder außerhalb. Wenn die Steuereinheit 21 nun erfasst, dass die Vortriebsgeschwindigkeit innerhalb dieses Geschwindigkeitsbereiches liegt (z.B. zwischen 6km/h und 25km/h) und durch das Signal S1 eine Betätigung der Betätigungseinrichtung 20 erfasst, gibt die Steuereinrichtung 21 ein zweites Signal S2 an den Elektromotor 22 aus. Durch dieses Signal S2 wird der Elektromotor 22 aktiviert und erzeugt einen Vortriebsimpuls auf den Tretroller 10. Wie aus Fig. 2 ersichtlich, ist der Elektromotor 22 mechanisch mit dem Hinterrad 13 verbunden.

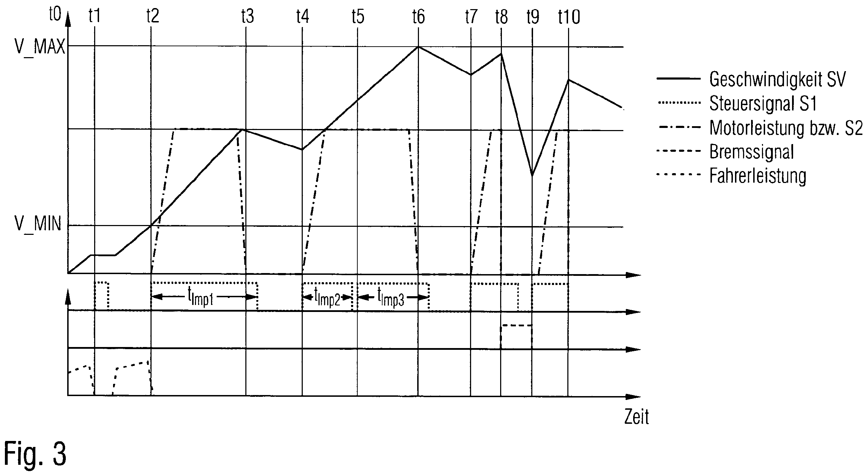

Die Bedienung bzw. das Bedienkonzept des Tretrollers 10 im zweiten Betriebsmodus soll anhand der Fig. 3 erläutert werden. In Fig. 3 sind verschiedene Fahrzustände beispielhaft abgebildet. Im Zeitinterfall t0 bis t2 liegt die Geschwindigkeit des Tretrollers 10 unterhalb einer Mindestgeschwindigkeit Vₘᵢₙ. Wie aus der Kurve der Fahrerleistung zu sehen ist, wird zwischen den Zeitpunkten t0 und t2 der Tretroller 10 durch Anschieben per Fuß vorwärts getrieben.

Im Zeitpunkt t1 wird die Betätigungseinrichtung 20 durch den Fahrer betätigt, erkennbar durch die ansteigende Flanke des Signals S1 in Figur 3 zum Zeitpunkt t1. Die Steuereinrichtung 21 unterbindet jedoch die Ansteuerung des Motorsignals, da unterhalb der Geschwindigkeit Vₘᵢₙ kein Signal S2 an den Motor 22 ausgegeben wird. Dies ist in Figur 3 dadurch erkennbar, dass kein Motorsignal, das dem Signal S2 entspricht, dargestellt ist. Das Fehlen des motorischen Vortriebsimpulses merkt der Fahrer des Tretrollers 10. Er lässt die Betätigungseinrichtung 20 los und schiebt den Roller mit Muskelkraft an. Dies ist durch die abfallende Flanke des Signals S1 dargestellt und durch den zweiten Anstieg der Fahrerleistung graphisch dargestellt. Unmittelbar vor dem Zeitpunkt t2 wird durch weiteres Anschieben des Fahrers der Tretroller weiter beschleunigt, so dass er im Zeitpunkt t2 die Mindestgeschwindigkeit übersteigt. Gleichzeitig wird im Zeitpunkt t2 die Betätigungseinrichtung 20 gedrückt. Die Steuereinrichtung 21 gibt nun ein Steuersignal S2 an den Elektromotor 22 aus, da sich die Geschwindigkeit des Tretrollers 10 in einem zulässigen Geschwindigkeitsbereich befindet. Dadurch wird der Roller 10 über eine Fahrstrecke von z.B. 5m mit einer vorgewählten Leistungsstufe beschleunigt, siehe in Fig. 3 bspw. die maximale Motorleistung P_{Motor max}. Während dieser Fahrstrecke wird eine Vortriebskraft auf den Tretroller 10 ausgeübt, dargestellt durch die Beschleunigung vom Zeitpunkt t2 bis unmittelbar kurz vor dem Zeitpunkt t3. Wie bereits eingangs erwähnt, liegt der Vortriebsimpuls nur für die Dauer an, die benötigt wird, um eine vorbestimmte Wegstrecke von bspw. 5m zurückzulegen und wird dann selbsttätig, d.h. automatisch wieder abgeschaltet. Dies ist aus Fig. 3 ersichtlich, da unmittelbar vor dem Zeitpunkt t3 die Motorleistung wieder abfällt und bedingt durch die Trägheit des Rollers etwas später, jedoch noch kurz vor dem Zeitpunkt t3 auch die Geschwindigkeit des Tretrollers sinkt. Da die Zeitdauer, während der Vortriebsimpuls auf den Roller ausgeübt wird, abhängig von der absoluten Geschwindigkeit des Rollers ist, wirkt der Vortriebsimpuls bei hohen Geschwindigkeiten kürzer und bei niedrigen Geschwindigkeiten länger auf den Tretroller 10.

Zwischen dem Zeitpunkt t3 und t4 rollt der Tretroller 10 ohne Vortriebskraft und wird durch die fahrdynamischen Reibungskräfte, d.h. Rollreibung, Fahrtwind usw. kontinuierlich abgebremst. Die Geschwindigkeit sinkt dadurch bis zum Zeitpunkt t4 ab. Im Zeitpunkt t4 wird die Betätigungseinrichtung 20 durch den Tretrollerfahrer erneut bedient. Die Steuereinrichtung 21 erfasst dies und gibt ein Steuersignal S2 aus, wodurch die Motorleistung erneut auf mit der Leistungsstufe auf den vorbestimmten Wert P_{Motor max} erhöht wird. Der Tretroller erfährt einen zusätzlichen Vortriebsimpuls und beschleunigt zwischen dem Zeitpunkt t4 und t5 weiter. Im Zeitpunkt t5 wird durch den Tretrollerfahrer die Betätigungseinrichtung erneut gedrückt. Dadurch wird ein weiterer Vortriebsimpuls erzeugt. Da die maximale Zeitdauer des im Zeitpunkt t4 erzeugten Vortriebsimpulses noch nicht abgelaufen ist, wird das Signal S2, das im Zeitpunkt t4 erzeugt wurde, unterbunden und im Zeitpunkt t5 ein neues Signal S2 erzeugt. Dies geschieht so schnell, dass in diesem Punkt der Verlauf der Motorleistung nicht dem Verlauf des Signals S2 entspricht. In diesem Punkt ist die Motorleistung konstant. Durch mehrfache Betätigung der Betätigungseinrichtung 20 können Vortriebsimpulse aneinander angehängt werden können und dadurch der Roller in kürzerer Zeit auf eine gewünschte Zielgeschwindigkeit beschleunigt werden. Der Absolutwert einzelner Beschleunigungen bleibt gleich. Es werden nur Phasen vermieden, in denen der Tretroller 10 ohne Vortriebsimpuls verlangsamen würde. Jede Betätigung der Betätigungseinrichtung 20 erzeugt einen neuen Vortriebsimpuls, der maximal ausreicht, um den Tretroller 10 eine vorbestimmte Wegstrecke wₓ von bspw. 10 m anzutreiben. Wird vor Erreichen der vorbestimmten Wegstrecke wₓ ein neuer Vortriebsimpuls generiert, so verfällt sozusagen die restliche Wegstrecke des vorhergehenden Impulses. Die Abhängigkeit der Zeitdauer eines Impulses von der tatsächlichen Geschwindigkeit des Tretrollers ist aus Fig. 3 ersichtlich, beim Vergleich der Zeitdauer tₗₘₚ₁ des Impulses zum Zeitpunkt t2 mit der Zeitdauer des Impuls tₗₘₚ₃ zum Zeitpunkt t5 vergleicht. Der spätere Vortriebsimpuls bei dem Zeitpunkt t5 ist wesentlich kürzer als der Vortriebsimpuls beim Zeitpunkt t2, da im Zeitpunkt t5 die Geschwindigkeit des Rollers höher ist. Die Zeitdauer tₗₘₚ₂ entspricht dabei nicht einer vollständigen vorbestimmten Wegstrecke wₓ. Der Tretrollerfahrer 10 beendet die Betätigung der Betätigungseinrichtung 20 kurz vor dem Zeitpunkt t5, erkennbar durch die abfallende Flanke des Signals S1. Dies führt zu einem Abbruch des Signals S2 an den Elektromotor 22. Durch die Betätigung der Betätigungseinrichtung 20 im Zeitpunkt t5 wird das Signal S2 erneut gestartet, um für die Dauer ausgegeben zu werden, die notwendig ist um die vorbestimmte Wegstrecke zurückzulegen.

Ab dem Zeitpunkt t6 bis zum Zeitpunkt t7 liegt kein Vortriebsimpuls an dem Tretroller 10 an. Die Geschwindigkeit nimmt zwischen diesen beiden Zeitpunkten ab. Analog zu den vorher beschriebenen Vortriebsimpulsen wird auch im Zeitpunkt t7 ein neuer Impuls erzeugt, der zu einer erneuten Beschleunigung des Tretrollers bis zum Zeitpunkt t8 führt. Im Zeitpunkt t8 wird ein Bremssignal durch den Tretrollerfahrer erzeugt. Das Abbremsen kann dabei mechanisch oder durch elektrische Rekuperation mit Hilfe des Elektromotors erfolgen. Obwohl die Betätigungseinrichtung weiterhin gedrückt wird - erkennbar aus dem Verlauf des Signals S1 - führt dies dazu, dass der Vortriebsimpuls unmittelbar abgeschaltet bzw. das Signal S2 unterbunden wird, wie aus dem Abfall der Motorleistung ersichtlich. Die Geschwindigkeit sinkt vom Zeitpunkt t8 bis zu dem Zeitpunkt t9. Im Zeitpunkt t9 wird die Bremse gelöst, d.h. das Bremssignal abgeschaltet und gleichzeitig ein neuer Vortriebsimpuls generiert.

Im Zeitpunkt t10 beendet der Tretrollerfahrer die Betätigung der Betätigungseinrichtung. Ab dem Zeitpunkt t10 rollt der Fahrer des Tretrollers 10 ohne Motorunterstützung weiter. Das heißt im Zeitpunkt t10 entlastet der Fahrer die Betätigungseinrichtung, so dass auch das Steuersignal S1 beendet wird. Dadurch wird die Motorleistung abgeschaltet und der Vortriebsimpuls annulliert.

Zum Beschleunigen des Tretrollers 10 muss der Fahrer das Pedal drücken und gedrückt halten. Dadurch generiert er eine Motorunterstützung für eine Beschleunigung über eine maximale Unterstützungsdistanz, die der vorbestimmten Wegstrecke wₓ entspricht. Nach Erreichen der maximalen Unterstützungsdistanz wₓ, wird die Motorunterstützung selbsttätig abgeschaltet, unabhängig davon, ob das Pedal weiter gedrückt ist oder nicht. Um weiter zu beschleunigen, muss der Fahrer das Pedal kurz loslassen, erneut drücken und gedrückt halten. Die Motorunterstützung wird erneut für eine Beschleunigung über eine weitere maximale Unterstützungsdistanz wₓ generiert. Diese Bedienlogik entspricht einer ersten Ausfürhungsform.

In einer weiteren Ausführungsform kann eine Beschleunigung des Rollers 10 durch eine alternative Bedienlogik generiert werden. Zum Beschleunigen des Tretrollers 10 muss der Fahrer auch hier das Pedal 20 drücken. Jedoch ist es nicht notwendig die Betätigungseinrichtung 20 gedrückt zu halten. Selbst wenn die Betätigungseinrichtung 20 losgelassen wird, bleibt eine Motorunterstützung für eine Beschleunigung über eine maximale Unterstützungsdistanz aufrechterhalten. Die maximale Unterstützungsdistanz entspricht auch hier der vorbestimmten Wegstrecke wₓ. Nach Erreichen der maximalen Unterstützungsdistanz wₓ, wird die Motorunterstützung selbsttätig abgeschaltet. Um weiter zu beschleunigen, muss der Fahrer das Pedal erneut drücken. Die Motorunterstützung wird erneut für eine Beschleunigung über eine weitere maximale Unterstützungsdistanz wₓ generiert. Gemäß dieser zweiten Variante fungiert die Betätigungseinrichtung wie ein Schalter, der aus einer "EIN" in eine "AUS" Stellung und umgekehrt überführbar ist. Sobald eine "EIN" Stellung der Betätigungseinrichtung 20 erfasst wird, wird ein Vortriebsimpuls erzeugt. Dieser Vortriebsimpuls bleibt bestehen, selbst wenn die Betätigungseinrichtung 20 vor Erreichen der maximalen Unterstützungsdistanz in eine "AUS" Stellung überführt wird. Im Unterschied dazu wird bei der ersten Variante der Vortriebsimpuls unmittelbar unterbunden, wenn eine "AUS" Stellung der Betätigungseinrichtung erfasst wird. Wird bei der zweiten Variante vor Erreichen der maximalen Unterstützungsdistanz die Betätigungseinrichtung 20 erneut in eine "EIN" Stellung überführt, wird ein neuer Vortriebsimpuls erzeugt. Dieser neue Vortriebsimpuls liegt für die Dauer an, die notwendig ist, um eine maximale Unterstützungsdistanz zu erreichen. Mit anderen Worten erfährt die Unterstützungsdistanz einen Reset, wenn vor Erreichen der maximalen Unterstützungsdistanz eines ersten Vortreibsimpuls ein zeitlich späterer, zweiter Vortreibsimpuls generiert wird.

In beiden Varianten der Bedienlogik dienen als Abbruchkriterien für die Motorunterstützung während einer Beschleunigung zum einen das Erreichen der Unterstützungsdistanz wₓ nach der letzten Pedalansteuerung oder das Erreichen einer maximalen Fahrzeuggeschwindigkeit Vₘₐₓ. Das Loslassen des Pedals durch den Fahrer ist nur in der ersten Variante der Bedienlogik ein Kriterium für den Abbruch des Vortriebs. Selbstverständlich ist die Erfassung eines Bremseingriffs, der durch den Fahrer generiert wird, ebenfalls ein Kriterium zur Unterbrechung der Beschleunigung. Die Nachlaufzeit des Elektromotors nach der Detektion eines Unterbrechungsgrundes beträgt maximal 0,8 s.

Da die Bedienlogik impulsbasiert funktioniert, d.h. einzelne Vortriebsimpulse auf den Tretroller 10 generiert werden, ist eine konstante Fahrt nur in bestimmten Grenzen möglich. Bei dem Fahrerwunsch nach einer konstanten Fahrt, d.h. mit konstanter Geschwindigkeit zwischen der minimalen Geschwindigkeit Vₘᵢₙ und der maximalen Geschwindigkeit Vₘₐₓ muss der Fahrer um den Wert der konstanten Geschwindigkeit pendeln. Durch kurze Pedalbetätigungen wird der Tretroller 10 entsprechend beschleunigt wobei nach dem Loslassen des Pedals die Geschwindigkeit aufgrund der Fahrwiderstände entsprechend wieder abfällt. Danach muss er erneut beschleunigen. So kann die gewünschte Fahrgeschwindigkeit durch den Fahrer nahezu konstant eingestellt werden. Eine absolute Konstantfahrt ist jedoch mit einem Tretroller 10 im muskulären Betrieb ebenfalls nur in bestimmten Grenzen möglich, so dass auch hier eine hinreichend genau Simulation generiert wird.

Zum Bremsen des Tretrollers 10 gibt es die Möglichkeit einer mechanischen Bremse. Bei Betätigung der Bremse wird ein Signal an die Steuerungseinrichtung 21 gegeben und eine eventuell vorhandene Motorunterstützung sofort unterbrochen. Somit stellt diese Funktion auch eine Not-Aus-Funktion für den Tretroller 10 dar. Alternativ dazu kann auch ein elektrisches Bremsen realisiert werden, indem der Elektromotor 22 als Generator funktioniert und die kinetische Energie des Tretrollers 10 rekuperiert. Die zurückgewonnene Energie wird dann als elektrische Energie gespeichert.

Mit dem Tretroller 10 kann eine konstante Fahrt mit Schrittgeschwindigkeit erzielt werden. Hierzu gibt es zwei Möglichkeiten diesen Fahrzustand zu erreichen. Im zweiten Fahrzustand, d.h. mit elektromotorischer Unterstützung, wird der Roller mit einer Geschwindigkeit, die größer als die Mindestgeschwindigkeit Vₘᵢₙ ist, bewegt. Durch Betätigen und dauerhaftes Gedrückt halten der Betätigungseinrichtung 20 wird ein Vortriebsimpuls generiert, der den Tretroller beschleunigt. Nach Erreichen und Überschreiten der maximalen Unterstützungsdistanz wₓ, wird der Elektromotor 22 abgeschaltet. Solange kein neuer Pedalimpuls vorliegt, wird der Tretroller 10 aufgrund der Fahrwiderstände entsprechend verzögert. Sinkt dabei die Geschwindigkeit des Rollers 10 bei gedrückter Betätigungseinrichtung unter die Schrittgeschwindigkeit ab, erfasst dies die Steuereinrichtung 21 und gibt ein Signal S2 aus, wodurch der Motor kurzzeitig zugeschalten wird. Dadurch wird ein kurzer Vortriebsimpuls generiert, um den Tretroller auf die Schrittgeschwindigkeit, bspw. 6 km/h zu beschleunigen. Nach Erreichen der Schrittgeschwindigkeit wird die Unterstützungsleistung des Motors wieder abgeschaltet. Bei erneutem Unterschreiten der Schrittgeschwindigkeit erfolgt durch die Steuereinrichtung 21 ein weiteres Zuschalten der motorischen Unterstützung usw. Durch diese Pulssteuerung des Signals S2 pendelt die Fahrzeuggeschwindigkeit um ca. 0,5 km/h um die Schrittgeschwindigkeit. Lässt der Fahrer die Betätigungseinrichtung 20 los, sinkt die Geschwindigkeit weiter ab, bis der Tretroller 10 zum Stillstand kommt.

Alternativ dazu kann eine Konstantfahrt mit Schrittgeschwindigkeit auch aus dem Stand erreicht werden. Beim Start befindet sich der Roller im Stillstand und somit im ersten Fahrmodus, d.h. er kann nur mittels muskulärer Kraft vorangetrieben werden. Durch Anschieben wird er über die Mindestgeschwindigkeit Vₘᵢₙ und über die Schrittgeschwindigkeit hinweg beschleunigt. Zum Aktivieren des zweiten Fahrmodus wird das Pedal zweimal kurzzeitig hintereinander gedrückt. Nach dem zweiten Drücken wird das Pedal in gedrückter Position gehalten. Dadurch wird jedoch kein Vortriebsimpuls durch den Elektromotor 22 generiert und somit der Roller 10 nicht elektromotorisch beschleunigt. Aufgrund der Fahrwiderstände verlangsamt der Tretroller 10 seine Vorwärtsbewegung, bis die Geschwindigkeit unter die Schrittgeschwindigkeit absinkt. Die Unterschreitung der Schrittgeschwindigkeit wird von der Steuereinheit 21 erfasst. Diese gibt daraufhin ein Signal S2 an den Elektromotor 22 aus, der einen Vortriebsimpuls auf den Roller 10 ausübt. Dadurch pendelt die Geschwindigkeit des Tretrollers um ca. 0,5 km/h um die Schrittgeschwindigkeit. In einer Ausführungsform der Erfindung können die Schrittgeschwindigkeit und die Mindestgeschwindigkeit Vₘᵢₙ gleich groß sein.

Bei nicht aktiviertem zweiten Betriebsmodus kann der Tretroller 10 auch konventionell rein mit Muskelkraft betrieben werden. Dadurch und bei Konstantfahrt mit Schrittgeschwindigkeit kann der Roller 10 auch in Fußgängerzonen genutzt werden. Durch die Nutzung des elektrischen Hilfsmotors kann der Aktionsradius und damit der Nutzungseinsatz wesentlich erweitert werden, vor allem in städtischen Gebieten. Gegenüber Fahrrädern, Pedelecs oder E-Bikes bietet der Tretroller wesentliche Vorteile, da eine Wartung von Kette oder Schaltung entfällt. Ebenfalls ist eine Verschmutzungsgefahr der Kleidung durch Schaltung und Kette, da diese nicht vorhanden sind, auch nicht gegeben. Die im Vorhergehenden beschriebene Steuereinrichtung 21 kann auch Regelungsfunktionen übernehmen und somit als Regelungseinrichtung fungieren.

## Patentansprüche

1. Steuerungseinrichtung (21), zur Steuerung eines Vortriebimpulses eines Tretrollers (10) wobei der Tretroller (10) in mindestens einem Betriebszustand mit elektrischer Motorkraft antreibbar ist, wobei die Steuerungseinrichtung (21) eingerichtet ist, zur Durchführung mindestens folgender Schritte:
- Erfassen eines Signals (S1) einer einzelnen Betätigung einer Betätigungseinrichtung (20), die von einem Tretrollerfahrer mit der Hand oder dem Fuß bedienbar ist,
- Erfassen eines Signals (SV) einer Geschwindigkeitserfassungseinrichtung (23), das die aktuelle Geschwindigkeit des Tretrollers (10) repräsentiert,
- Abgleichen des Werts der aktuellen Geschwindigkeit des Tretrollers (10) mit einem Wert einer Mindestgeschwindigkeit (Vₘᵢₙ) und/oder einem Wert einer maximalen Geschwindigkeit (Vₘₐₓ) und
- Ausgeben eines Signals (S2) an einen elektrischen Motor (22), wenn die aktuelle Geschwindigkeit größer oder gleich der Mindestgeschwindigkeit (Vₘᵢₙ) und kleiner oder gleich der Maximalgeschwindigkeit (Vₘₐₓ) des Tretrollers (10) ist wobei durch das Signal (S2) der elektrische Motor (22) einen einzelnen Vortriebsimpuls auf den Tretroller (10) erzeugt,
wobei der Vortriebsimpuls für eine vorbestimmte Zeitdauer besteht.

2. Steuerungseinrichtung (21) nach Anspruch 1, wobei die Steuerungseinrichtung (21) eingerichtet ist, zur Durchführung mindestens folgender Schritte:
- Erfassen des Betriebszustands des Tretrollers (10), wobei wenn der Tretroller (10) in einem ersten Betriebszustand, in dem der Tretroller (10) mit Muskelkraft betreibbar ist, bei einer Erfassung der Betätigung der Betätigungseinrichtung (20) kein Signal (S2) an den Elektromotor (22) ausgegeben wird und
wenn der Tretroller (10) in einem zweiten Betriebszustand, in dem der Tretroller (10) mit motorischer Kraft antreibbar ist, bei einer Erfassung der Betätigung der Betätigungseinrichtung (20) ein Signal (S2) an den Elektromotor (22) ausgegeben wird.

3. Verfahren zur Steuerung eines Vortriebsimpuls auf einen Tretroller (10), mit den Schritten:
- Erfassen einer einzelnen Betätigung einer Betätigungseinrichtung (20), die von einem Tretrollerfahrer mit der Hand oder dem Fuß bedienbar ist,
- Erfassen einer Geschwindigkeit des Tretrollers (10) und
- Abgleich der erfassten Geschwindigkeit mit einer Mindestgeschwindigkeit und einer maximal zulässigen Geschwindigkeit, wobei nur wenn die Geschwindigkeit des Tretrollers größer oder gleich der Mindestgeschwindigkeit und kleiner oder gleich der maximal zulässigen Geschwindigkeit ist, ein Signal (S2) an einen Motor (22) ausgegeben wird, wobei das Ausgeben des Signals (S2) an den Motor (22) einen einzelnen Vortriebsimpuls auf den Tretroller (10) erzeugt, **dadurch gekennzeichnet, dass** der Vortriebsimpuls für eine vorbestimmte Zeitdauer besteht.

4. Verfahren nach Anspruch 3, mit dem Schritt:
- Erfassen eines Betriebszustands in dem der Tretroller (10) mit motorischer Kraft antreibbar ist.

5. Tretroller (10) zum Transport von Personen, wobei der Tretroller (10) in zumindest einem Betriebsmodus mit motorischer Kraft antreibbar ist, mit:
- einer Betätigungseinrichtung (20), die von einem Tretrollerfahrer mit der Hand oder dem Fuß bedienbar ist und
- einem elektrischen Motor (22), mit dem der Tretroller (10) antreibbar ist,
**dadurch gekennzeichnet, dass**
- der Tretroller eine Steuerungseinrichtung (21) nach einem der vorhergehenden Ansprüche 1 oder 2 umfasst, und dass
- der Tretroller (10) eingerichtet ist, bei einer einzelnen Betätigung der Betätigungseinrichtung (20) einen einzelnen Vortriebsimpuls mit dem Motor (22) an dem Tretroller (10) zu erzeugen, wobei der Vortriebsimpuls für eine vorbestimmte Zeitdauer besteht.

6. Tretroller (10) nach Anspruch 5, **dadurch gekennzeichnet, dass** in der vorbestimmten Zeitdauer der Tretroller (10) eine vorbestimmte Wegstrecke (wₓ) zurücklegt.

7. Tretroller (10) nach einem der Ansprüche 5 oder 6, **dadurch gekennzeichnet, dass**
unterhalb einer Mindestgeschwindigkeit (Vₘᵢₙ) und/oder oberhalb einer Maximalgeschwindigkeit (Vₘₐₓ) des Tretrollers (10) bei Betätigung der Betätigungseinrichtung (20) kein Vortriebsimpuls erzeugbar ist.

8. Tretroller (10) nach einem der Ansprüche 5 bis 7, **dadurch gekennzeichnet, dass**
oberhalb einer Mindestgeschwindigkeit (Vₘᵢₙ) des Tretrollers (10) der Betriebsmodus in dem der Tretroller (10) mit motorischer Kraft antreibbar ist, durch zweifache Betätigung der Betätigungseinrichtung (20) aktivierbar ist.

## Claims

1. Control device (21) for controlling a propulsion pulse of a scooter (10), wherein the scooter (10) can be driven by electrical motor power in at least one operating state, wherein the control device (21) is designed to carry out at least the following steps:
- detecting a signal (S1) of single operation of an operating device (20) which can be operated by the hand or the foot of a scooter rider,
- detecting a signal (SV) of a speed detection device (23) which represents the current speed of the scooter (10),
- comparing the value of the current speed of the scooter (10) with a value of a minimum speed (Vₘᵢₙ) and/or a value of a maximum speed (Vₘₐₓ), and
- outputting a signal (S2) to an electric motor (22) when the current speed is greater than or equal to the minimum speed (Vₘᵢₙ) and less than or equal to the maximum speed (Vₘₐₓ) of the scooter (10), wherein a single propulsion pulse is generated on the scooter (10) by the signal (S2) of the electric motor (22), wherein the propulsion pulse lasts for a predetermined time period.

2. Control device (21) according to Claim 1, wherein the control device (21) is designed to carry out at least the following steps:
- detecting the operating state of the scooter (10), wherein, when the scooter (10) is in a first operating state in which the scooter (10) can be operated by muscle power, no signal (S2) is output to the electric motor (22) when operation of the operating device (20) is detected, and,
when the scooter (10) is in a second operating state in which the scooter (10) can be driven by motor power, a signal (S2) is output to the electric motor (22) when operation of the operating device (20) is detected.

3. Method for controlling a propulsion pulse on a scooter (10), comprising the steps of:
- detecting a single operation of an operating device (20) which can be operated by the hand or the foot of a scooter rider,
- detecting a speed of the scooter (10) and
- comparing the detected speed with a minimum speed and a maximum permissible speed, wherein a signal (S2) is output to a motor (22) only when the speed of the scooter is greater than or equal to the minimum speed and less than or equal to the maximum permissible speed, wherein the output of the signal (S2) to the motor (22) generates a single propulsion pulse on the scooter (10), **characterized in that** the propulsion pulse lasts for a predetermined time period.

4. Method according to Claim 3, comprising the step of:
- detecting an operating state in which the scooter (10) can be driven by motor power.

5. Scooter (10) for transporting individuals, wherein the scooter (10) can be driven by motor power in at least one operating mode, comprising:
- an operating device (20) which can be operated by the hand or the foot of a scooter rider, and
- an electric motor (22) with which the scooter (10) can be driven,
**characterized in that**
- the scooter comprises a control device (21) according to either of the preceding Claims 1 and 2, and **in that**
- the scooter (10) is designed to generate a single propulsion pulse on the scooter (10) by the motor (22) when the operating device (20) is operated once, wherein the propulsion pulse lasts for a predetermined time period.

6. Scooter (10) according to Claim 5, **characterized in that** the scooter (10) covers a predetermined distance (wₓ) in the predetermined time period.

7. Scooter (10) according to either of Claims 5 and 6, **characterized in that**
no propulsion pulse can be generated below a minimum speed (Vₘᵢₙ) and/or above a maximum speed (Vₘₐₓ) of the scooter (10) when the operating device (20) is operated.

8. Scooter (10) according to one of Claims 5 to 7, **characterized in that**
the operating mode in which the scooter (10) can be driven by motor power can be activated above a minimum speed (Vₘᵢₙ) of the scooter (10) by double operation of the operating device (20).

## Revendications

1. Dispositif de commande (21) destiné à commander une impulsion de propulsion d'une trottinette (10), la trottinette (10) pouvant être entraînée dans au moins un état de fonctionnement avec la force d'un moteur électrique, le dispositif de commande (21) étant conçu pour réaliser au moins les étapes suivantes :
- détecter un signal (S1) d'un seul actionnement d'un dispositif d'actionnement (20) qui peut être actionné par un conducteur de trottinette avec sa main ou son pied,
- détecter un signal (SV) d'un dispositif de détection de vitesse (23) qui représente la vitesse actuelle de la trottinette (10),
- comparer la valeur de la vitesse actuelle de la trottinette (10) à une valeur d'une vitesse minimale (Vₘᵢₙ) et/ou une valeur d'une vitesse maximale (Vₘₐₓ) et
- délivrer un signal (S2) à un moteur électrique (22) lorsque la vitesse actuelle est supérieure ou égale à la vitesse minimale (Vₘᵢₙ) et inférieure ou égale à la vitesse maximale (Vₘₐₓ) de la trottinette (10), le signal (S2) induisant le moteur électrique (22) à générer une seule impulsion de propulsion sur la trottinette (10), l'impulsion de propulsion étant présente pendant une durée prédéterminée.

2. Dispositif de commande (21) selon la revendication 1, le dispositif de commande (21) étant conçu pour réaliser au moins les étapes suivantes :
- détecter l'état de fonctionnement de la trottinette (10), lorsque la trottinette (10) est dans un premier état de fonctionnement dans lequel la trottinette (10) peut être actionnée avec la force musculaire, aucun signal (S2) n'étant délivré au moteur électrique (22) lors de la détection de l'actionnement du dispositif d'actionnement (20), et
lorsque la trottinette (10) est dans un deuxième état de fonctionnement dans lequel la trottinette (10) peut être entraînée avec la force du moteur, un signal (S2) étant délivré au moteur électrique (22) lors de la détection de l'actionnement du dispositif d'actionnement (20).

3. Procédé de commande d'une impulsion de propulsion sur une trottinette (10), le procédé comprenant les étapes suivantes :
- détecter un seul actionnement d'un dispositif d'actionnement (20) pouvant être actionné par un conducteur de trottinette avec sa main ou son pied,
- détecter une vitesse de la trottinette (10) et
- comparer la vitesse détectée à une vitesse minimale et une vitesse maximale admissible, un signal (S2) n'étant délivré à un moteur (22) que lorsque la vitesse de la trottinette est supérieure ou égale à la vitesse minimale et inférieure ou égale à la vitesse maximale autorisée, la délivrance du signal (S2) au moteur (22) générant une impulsion de propulsion individuelle sur la trottinette (10), **caractérisé en ce que** l'impulsion de propulsion est présente pendant une durée prédéterminée.

4. Procédé selon la revendication 3, le procédé comprenant l'étape suivante :
- détecter un état de fonctionnement dans lequel la trottinette (10) peut être entraînée avec la force du moteur.

5. Trottinette (10) destinée au transport de personnes, la trottinette (10) pouvant être entraînée dans au moins un mode de fonctionnement avec la force d'un moteur, la trottinette comprenant :
- un dispositif d'actionnement (20) qui peut être actionné par le conducteur de trottinette à la main ou au pied et
- un moteur électrique (22) avec lequel la trottinette (10) peut être entraînée,
**caractérisée en ce que**
- la trottinette comprend un dispositif de commande (21) selon l'une des revendications précédentes 1 et 2, et **en ce que**
- la trottinette (10) est conçue pour générer une seule impulsion de propulsion avec le moteur (22) sur la trottinette (10) lors d'un seul actionnement du dispositif d'actionnement (20), l'impulsion de propulsion étant présente pendant une durée prédéterminée.

6. Trottinette (10) selon la revendication 5, **caractérisée en ce que** la trottinette (10) parcourt une distance prédéterminée (wₓ) pendant la durée prédéterminée.

7. Trottinette (10) selon l'une des revendications 5 et 6, **caractérisée en ce que**
aucune impulsion de propulsion ne peut être générée au-dessous d'une vitesse minimale (Vₘᵢₙ) et/ou au-dessus d'une vitesse maximale (Vₘₐₓ) de la trottinette (10) lors de l'actionnement du dispositif d'actionnement (20) .

8. Trottinette (10) selon l'une des revendications 5 à 7, **caractérisée en ce que**
au-dessus d'une vitesse minimale (Vₘᵢₙ) de la trottinette (10), le mode de fonctionnement, dans lequel la trottinette (10) peut être entraînée avec la force d'un moteur, peut être activé par un double actionnement du dispositif d'actionnement (20).
